# EUROPÄISCHE PATENTANMELDUNG

(11) **EP 2 050 846 A2**
(43) Veröffentlichungstag der Anmeldung: **22.04.2009**
(21) Anmeldenummer: 08018009.4
(22) Anmeldetag: 15.10.2008
(51) Int. Cl.: D03D 3/04

(54) **Transportband zum Transport stückiger Güter sowie Verfahren zu dessen Herstellung**

(30) Priorität: 16.10.2007 DE 102007049722
(71) Anmelder: Heimbach GmbH & Co.KG, 52353 Düren (DE)
(72) Erfinder: Halterbeck, Walter, 52353 Düren (DE)
(74) Vertreter: Paul, Dieter-Alfred

(57) **Zusammenfassung**

Transportband (1) mit einem sich über dessen Länge und Breite erstreckenden Trägergewebe (2) und mit Stirnkanten, die über eine Steckdrahtnaht verbindbar sind, welche zwei Drahtwendeln (10, 14) aufweist, wobei eine Drahtwendel (10, 14) mit jeder Stirnkante des Transportbandes (1) verbunden ist und zwei Drahtwendeln (10, 14) derart in Überlappung bringbar sind, dass ein Steckdraht (16) durch die sich überlappenden Bereiche steckbar ist, und wobei das Trägergewebe (2) zwei Querfadenlagen (3, 4) mit Querfäden (5, 6) aufweist, und an den Stirnkanten unter Bildung von umschlagstreifen (12) umgeschlagen ist, die mit den diesen gegenüber liegenden Abschnitten des Trägergewebes (2) Umschlagzonen (13) mit die Stirnkanten des Transportbandes ausbildenden Umschlagkanten ausbilden und an dem Trägergewebe (2) befestigt sind, wobei in den Umschlagstreifen (12) die Querfäden (6) einer Querfadenlage (4) unter Beibehaltung einer Querfadenlage (3) weggelassen oder entfernt sind.

## Beschreibung

Die Erfindung betrifft ein Transportband zum Transport stückiger Güter mit folgenden Merkmalen:
a) das Transportband weist ein sich über dessen Länge und Breite erstreckendes Trägergewebe auf;
b) das Transportband bildet endseitig Stirnkanten aus;
c) die Stirnkanten sind zur Bildung eines endlosen Transportbandes über eine Steckdrahtnaht verbindbar;
d) die Steckdrahtnaht weist wenigstens zwei Drahtwendeln auf;
e) wenigstens eine Drahtwendel ist mit jeder Stirnkante des Transportbandes verbunden;
f) zwei Drahtwendeln sind zum Schließen der Steckdrahtnaht derart in Überlappung bringbar, dass zumindest ein Steckdraht zur Kupplung der Drahtwendeln und damit der Stirnkanten durch die sich überlappenden Bereiche steckbar ist.

Ferner bezieht sich die Erfindung auf ein Verfahren zur Herstellung eines solchen Transportbandes mit folgenden Verfahrensschritten:
a) es wird ein Trägergewebe mit Längs- und Querfäden unter Bildung von Stirnkanten hergestellt;
b) die Stirnkanten werden mit sich längs zu diesen erstreckenden Drahtwendeln versehen;
c) zwei Drahtwendeln sind zur Bildung einer die Stirnkanten verbindenden Steckdrahtnaht derart in Überlappung bringbar, dass ein Steckdraht zur Kupplung der Drahtwendeln und damit der Stirnkanten durch die sich überlappenden Bereiche steckbar ist.

Für die Aufbereitung und Herstellung von Lebensmitteln, beispielsweise in Bäckereimaschinen oder dergleichen, werden textile Transportbänder verwendet, auf die das zu transportierende Lebensmittel aufgelegt und dann zur Weiterverarbeitung in einem anderen Teil der Maschine oder zur Verpackungsstation transportiert wird. Die Lebensmittel können teigige oder körnige Konsistenz haben.

Die bekannten Transportbänder haben einen textilen Träger in Form eines Trägergewebes. Länge und Breite des Transportbandes entsprechen dem jeweiligen Einsatzzweck. Um ein solches Transportband bequem in der jeweiligen Maschine installieren zu können, hat es eine endliche Länge und demgemäß an den Enden Stirnkanten, die über eine Steckdrahtnaht verbindbar sind. Beispiele für solche Transportbänder sind der DE 1 923 039 A, DE 42 22 412 A1, DE 78 14 665 U1 und EP 1 721 842 B1 zu entnehmen.

Eine Steckdrahtnaht besteht in der Regel aus zwei Drahtwendeln und einem oder mehreren Steckdrähten. Jeweils eine Drahtwendel ist an einer Stirnkante des Trägers angebracht. Nach dem Einlegen des Transportbandes in die Maschine werden die Stirnkanten zusammengeführt und dabei die Drahtwendeln in gegenseitige Überlappung gebracht, so dass von den überlappenden Bereichen der Drahtwendeln ein Durchsteckkanal gebildet wird, durch den der Steckdraht geschoben werden kann. Über den Steckdraht werden dann die Drahtwendeln und damit die Stirnkanten des Trägergewebes scharnierartig miteinander gekuppelt.

Die Drahtwendeln können dadurch am Träger befestigt werden, dass Längsfäden des Trägers an den Stirnkanten um die Drahtwendeln herumgelegt und zurückgelegt werden (DE 42 22 412 A1). Es besteht jedoch auch die Möglichkeit, das Trägergewebe in einer die vorgesehene Länge des Transportbandes überschreitenden Überlänge mit gleichgroßen Überständen an beiden Enden zu weben und dann die Überstände unter Bildung von Umschlagstreifen umzuschlagen und die Umschlagstreifen an dem Trägergewebe zu befestigen (vgl. DE 78 14 665 U1). Eine ähnliche Lösung ist der DE 1 923 039 A zu entnehmen.

Nachteilig bei diesen Lösungen ist, dass durch das Umlegen eine Umschlagzone entsteht, die deutlich dicker ist als die Dicke des Trägergewebes und somit eine Unstetigkeit darstellt. Um dies zu vermeiden ist in der EP 1 719 932 A1 ein Verfahren offenbart, bei dem die Drahtwendeln zunächst jeweils an einem Textilstreifen angebracht werden und die Textilstreifen mit dem Träger über Klebstoffschichten verbunden werden, wobei zuvor die Dicke des Trägers in dem für die Textilstreifen vorgesehenen Bereich derart verringert wird, dass nach Anbringung der Textilstreifen die Dicke des Trägers und des Textilstreifens zusammen der Dicke des Trägers im übrigen Bereich entspricht. Allerdings ist die Herstellung dieses Transportbandes arbeitsaufwändig. Auch weist das Transportband im Bereich der Naht eine nicht für alle Verwendungsstellen ausreichende Flexibilität auf.

Der Erfindung liegt die Aufgabe zugrunde, ein Transportband der eingangs genannten Art so weiterzuentwickeln, dass es wesentlich schneller und damit kostengünstiger herstellbar ist und dass gleichwohl Unstetigkeiten im Bereich der Steckdrahtnaht weitgehend vermieden werden.

Diese Aufgabe wird erfindungsgemäß durch folgende Merkmale gelöst:
g) das Trägergewebe hat wenigstens zwei Querfadenlagen, die Querfäden aufweisen;
h) das Trägergewebe ist an den Stirnkanten unter Bildung von Umschlagstreifen umgeschlagen;
i) die Umschlagstreifen und die diesen gegenüber liegenden Abschnitte des Trägergewebes bilden Umschlagzonen mit die Stirnkanten des Transportbandes ausbildenden Umschlagkanten;
j) die Umschlagstreifen sind an dem Trägergewebe befestigt;
k) wenigstens in den Umschlagstreifen sind die Querfäden zumindest einer Querfadenlage unter Beibehaltung wenigstens einer Querfadenlage weggelassen oder entfernt.

Grundgedanke der Erfindung ist es, das Trägergewebe in Überlänge mit gleichgroßen Überständen an beiden Enden herzustellen und dabei zwei Querfadenlagen vorzusehen.
Die Überstände werden umgeschlagen, wenn zuvor die Querfäden zumindest einer Querfadenlage in dem Umschlagstreifen entfernt oder schon beim Webprozess weggelassen werden. Nach Befestigung der Umschlagstreifen erhält man eine sehr zugfeste Verbindung der Stirnkanten des Transportbandes, wobei die Dicke des Transportbandes in der Umschlagzone gleich groß oder kaum größer ist als im übrigen Bereich. Dies gilt insbesondere dann, wenn auch im Trägergewebe die Querfäden zumindest einer Querfadenlage im Bereich der Umschlagzone weggelassen oder entfernt sind. Dabei sollte die Anzahl der Querfadenlagen in der Umschlagzonen der Anzahl der Querfadenlagen im übrigen Bereich des Trägergewebes entsprechen. Auf diese Weise weichen Dicke und Dichte der Umschlagzone nicht von der Dicke und Dichte im übrigen Bereich des Trägergewebes ab.

In Ausgestaltung der Erfindung ist vorgesehen, dass die Querfäden der im Bereich der Umschlagzonen innen liegenden Querfadenlage weggelassen oder entfernt sind. Die im Bereich der Umschlagzonen außen liegenden Querfadenlagen können multifile oder gesponnene Querfäden aufweisen oder daraus bestehen, wobei die dort innen liegende Querfadenlage monofile Querfäden aufweist oder daraus besteht. Alternativ dazu kann auch vorgesehen sein, dass die Querfäden als monofile Querfäden ausgebildet sind, wobei die im Bereich der Umschlagzonen innen liegende Querfadenlage Querfäden mit größerem Durchmesser hat als die Querfäden der dort außen liegenden Querfadenlage. Vorzugsweise sollte dann die Anzahl der Querfäden der außen liegenden Querfadenlage größer sein als die der Querfäden der innen liegenden Querfadenlage.

Nach einem weiteren Merkmal der Erfindung ist vorgesehen, dass die an der Stirnseite angebrachten Drahtwendeln die Umschlagkante durchsetzen und an deren Rückseite jeweils wenigstens einen dort eingelegten Kupplungsdraht umschlingen. Statt dessen kann die Anbringung der Drahtwendeln auf die in der DE 1 923 039 A beschriebenen Art geschehen, d.h. allein durch Umschlingen der Längsfäden ohne Einlegen eines Kupplungsdrahtes. Um die Drahtwendeln besser in die Umschlagkante einlegen zu können, sollte die Umschlagkanten von Querfäden befreit sein, so dass im Bereich der Umschlagkanten querfädenfreie Zonen entstehen.

Die Befestigung der Umschlagstreifen an dem Trägergewebe kann auf verschiedene weise geschehen, beispielsweise durch Vernähen und/oder Verkleben. Diese Befestigungsarten tragen relativ wenig auf.

Für bestimmte Anwendungszwecke ist es wichtig, dass das Trägergewebe an der äußeren und/oder inneren Flachseite mit einer Abdeckschicht versehen ist, beispielsweise in Form einer Beschichtung. Die Beschichtung kann beispielsweise aus Silikonelastomer, Fluorsilikonelastomer, Polyurethanelastomer und/oder Acrylelastomer bestehen. Die Dicke kann 1 mm und mehr betragen. Als Abdeckschicht kann statt einer Beschichtung auch eine Faserauflage vorgesehen sein. Um im Bereich der Steckdrahtnaht keine Lücke entstehen zu lassen, sollte die Abdeckschicht die Steckdrahtnaht von einer Stirnkante des Trägergewebes her überdecken.

Der zweite, sich auf das Herstellungsverfahren beziehende Teil der Aufgabe wird erfindungsgemäß durch ein Verfahren mit folgenden Verfahrensschritten gelöst:
d) das Trägergewebe wird in einer die vorgesehene Länge des Transportbandes überschreitenden Überlänge mit gleich großen Überständen an beiden Enden gewebt;
e) das Trägergewebe wird mit zumindest zwei Querfadenlagen gewebt;
f) die Querfäden zumindest einer Querfadenlage werden unter Beibehaltung wenigstens einer Querfadenlage zumindest in beiden Überständen weggelassen und/oder entfernt, vorzugsweise auch in der Umschlagzone des Trägergewebes;
g) jeweils im Bereich des trägerseitigen Beginns der Überstände werden die Wendeln mit dem Trägergewebe verbunden;
h) danach werden die Überstände unter Bildung von Umschlagstreifen umgeschlagen, wobei die Umschlagsstreifen und die diesen gegenüberliegenden Abschnitte des Trägergewebes eine Umschlagzone bilden;
i) die Umschlagstreifen werden an dem Trägergewebe befestigt.

Unter Anwendung dieses Verfahrens entsteht ein Transportband, das sich durch hohe Zugfestigkeit gerade auch im Nahtbereich wie auch durch kostengünstige Herstellung auszeichnet.

In der Zeichnung ist die Erfindung anhand eines Ausführungsbeispiels näher veranschaulicht. Es zeigen:
- Figur 1: eine Seitenansicht auf einen der beiden Endbereiche des erfindungsgemäßen Transportbandes vor der Entfernung der Querfäden in der Umschlagzone;
- Figur 2: das Transportband in der Darstellung gemäß Figur 1 nach Entfernen von Querfäden in der Umschlagzone und Einlegen einer Drahtwendel und
- Figur 3: das Transportband in der Darstellung gemäß den Figuren 1 und 2 nach Umschlagen des Umschlagstreifens und nach Kupplung mit einer zweiten Drahtwendel.

Das in den Figuren dargestellte Transportband 1 weist ein Trägergewebe 2 auf, das eine außen liegende Querfadenlage 3 und eine innen liegende Querfadenlage 4 aufweist. Die außen liegende Querfadenlage 3 hat doppelt so viele Querfäden - beispielhaft mit 5 bezeichnet - wie die Querfäden - beispielhaft mit 6 bezeichnet - der innen liegenden Querfadenlage 4. Die Querfadenlagen 3, 4 sind durch Längsfäden 7, 8 eingebunden und bilden mit diesen ein doppellagiges Gewebe.

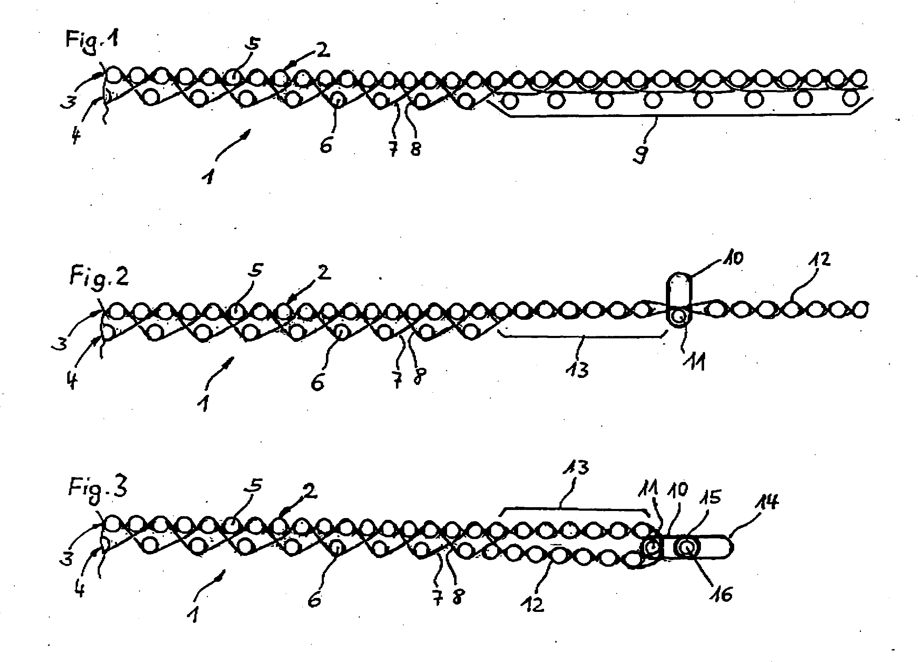

Wie aus Figur 1 ersichtlich, weist das Transportband 1 einen Endbereich 9 auf, in dem die Längsfäden 7, 8 nur die Querfäden 5 der außen liegenden Querfadenlage 3 einbinden. Die unteren Querfäden 6 werden über die gesamte Länge des Endbereichs 9 entfernt, so dass das Trägergewebe 2 - wie aus Figur 2 ersichtlich - im Endbereich 9 nur noch eine, nämlich die äußere Querfadenlage 3 aufweist.

Nach Entfernen der Querfäden 6 im Endbereich 9 werden in dessen Mitte zwei Querfäden 5 entfernt und dann dort eine Drahtwendel 10 - sie erstreckt sich senkrecht zur Zeichnungsebene - in die Längsfäden 7, 8 eingelegt. Unterhalb der Längsfäden 7, 8 wird dann ein Kupplungsdraht 11 durch die Drahtwendel 10 hindurchgesteckt und folglich eine Verbindung der Drahtwendel 10 mit dem Trägergewebe 2 hergestellt. Hierdurch entsteht zum freien Ende hin ein Umschlagstreifen 12, der einen über die vorgesehene Länge des Transportbandes 1 hinausgehenden Überstand bildet und anschließend um 180° zur Unterseite des Trägergewebes 2 umgeschlagen wird, wie aus Figur 3 ersichtlich ist. In der hierdurch gebildeten Umschlagzone 13 entsteht auf diese weise wieder ein doppellagiges Gewebe, dessen Dicke nicht größer ist als die des Trägergewebes 2 im übrigen.

Danach wird der Umschlagstreifen 12 mit der außen liegenden Querfadenlage 3 des Trägergewebes 2 vernäht.

Nicht dargestellt ist, dass auch das andere Ende des Transportbandes 1 in gleicher Weise behandelt wird, so dass eine spiegelbildliche Gestaltung der Endbereiche des Transportbandes 1 entsteht. Auch dort ist also eine Drahtwendel 14 befestigt. In Figur 3 ist diese Drahtwendel 14 (ohne das dazugehörige Ende des Transportbandes 1, also isoliert) dargestellt. Die Drahtwendel 14 überlappt die Drahtwendel 10 unter Bildung eines Durchsteckkanals 15, in den ein Steckdraht 16 eingeschoben ist. Der Steckdraht 16 kuppelt die beiden Drahtwendeln 10, 14 scharnierartig.

## Patentansprüche

1. Transportband (1) zum Transport stückiger Güter mit folgenden Merkmalen:
a) das Transportband (1) weist ein sich über dessen Länge und Breite erstreckendes Trägergewebe (2) auf;
b) das Transportband (1) bildet endseitig Stirnkanten aus;
c) die Stirnkanten sind zur Bildung eines endlosen Transportbandes (1) über eine Steckdrahtnaht verbindbar;
d) die Steckdrahtnaht weist wenigstens zwei Drahtwendeln (10, 14) auf;
e) wenigstens eine Drahtwendel (10, 14) ist mit jeder Stirnkante des Transportbandes (1) verbunden;
f) zwei Drahtwendeln (10, 14) sind zum Schließen der Steckdrahtnaht derart in Überlappung bringbar, dass zumindest ein Steckdraht (16) zur Kupplung der Drahtwendeln (10, 14) und damit der Stirnkanten durch die sich überlappenden Bereiche steckbar ist;
**gekennzeichnet durch** folgende Merkmale:
g) das Trägergewebe (2) hat wenigstens zwei Querfadenlagen (3, 4), die Querfäden (5, 6) aufweisen;
h) das Trägergewebe (2) ist an den Stirnkanten unter Bildung von Umschlagstreifen (12) umgeschlagen;
i) die Umschlagstreifen (12) und die diesen gegenüber liegenden Abschnitte des Trägergewebes (2) bilden Umschlagzonen (13) mit die Stirnkanten des Transportbandes ausbildenden Umschlagkanten;
j) die Umschlagstreifen (12) sind an dem Trägergewebe (2) befestigt;
k) zumindest in den Umschlagstreifen (12) sind die Querfäden (6) zumindest einer Querfadenlage (4) unter Beibehaltung wenigstens einer Querfadenlage (3) weggelassen oder entfernt.

2. Transportband nach Anspruch 1, **dadurch gekennzeichnet, dass** die Querfäden (6) zumindest einer Querfadenlage (4) im Bereich der Umschlagzonen (13) auch im Trägergewebe (2) weggelassen oder entfernt sind.

3. Transportband nach Anspruch 2, **dadurch gekennzeichnet, dass** die Anzahl der Querfadenlagen (3, 4) in den Umschlagzonen (13) der Anzahl der Querfadenlagen (3, 4) im übrigen Bereich des Trägergewebes (2) entspricht.

4. Transportband nach einem der Ansprüche 1 bis 3, **dadurch gekennzeichnet, dass** die Querfäden (6) der im Bereich der Umschlagzonen (13) innen liegenden Querfadenlage (4) weggelassen oder entfernt sind.

5. Transportband nach einem der Ansprüche 1 bis 4, **dadurch gekennzeichnet, dass** die im Bereich der Umschlagzonen (13) außen liegende Querfadenlage (3) multifile oder gesponnene Querfäden (5) aufweist oder daraus besteht und dass die dort innen liegende Querfadenlage (4) monofile Querfäden (6) aufweist oder daraus besteht.

6. Transportband nach einem der Ansprüche 1 bis 4, **dadurch gekennzeichnet, dass** die Querfäden als monofile Querfäden ausgebildet sind, wobei die im Bereich der Umschlagzonen innen liegende Querfadenlage Querfäden mit größerem Durchmesser hat als die Querfäden der dort außen liegenden Querfadenlage.

7. Transportband nach Anspruch 6, **dadurch gekennzeichnet, dass** die Anzahl der Querfäden (5) der außen liegenden Querfadenlage (3) größer ist als die der Querfäden (6) der innen liegenden Querfadenlage (4).

8. Transportband nach einem der Ansprüche 1 bis 7, **dadurch gekennzeichnet, dass** die an der Stirnkante angebrachten Drahtwendeln (10, 14) die Umschlagkante durchsetzen und an deren Rückseite jeweils wenigstens einen dort eingelegten Kupplungsdraht (11) umschlingen.

9. Transportband nach einem der Ansprüche 1 bis 8, **dadurch gekennzeichnet, dass** die Umschlagkanten von Querfäden (5) befreit sind.

10. Transportband nach einem der Ansprüche 1 bis 9, **dadurch gekennzeichnet, dass** die Umschlagstreifen (12) mit dem Trägergewebe (2) in der Umschlagzone (13) vernäht und/oder verklebt sind.

11. Transportband nach einem der Ansprüche 1 bis 10, **dadurch gekennzeichnet, dass** das Trägergewebe (29 an der äußeren und/oder inneren Flachseite mit einer Abdeckschicht versehen ist, die insbesondere als Beschichtung ausgebildet ist, beispielsweise aus Silikonelastomer, Fluorsilikonelastomer, Polyurethanelastomer und/oder Acrylelastomer besteht.

12. Transportband nach Anspruch 11, **dadurch gekennzeichnet, dass** die Beschichtung eine Dicke von wenigstens 1 mm hat.

13. Transportband nach Anspruch 12, **dadurch gekennzeichnet, dass** die Abdeckschicht als Faserauflage ausgebildet ist.

14. Transportband nach einem der Ansprüche 11 bis 13, **dadurch gekennzeichnet, dass** die Abdeckschicht die Steckdrahtnaht von einer Stirnkante des Trägergewebes (2) her überdeckt.

15. Verfahren zur Herstellung eines Transportbandes (1) für den Transport von stückigen Gütern mit folgenden Verfahrensschritten:
a) es wird ein Trägergewebe (2) mit Längsfäden (7, 8) und Querfäden (5, 6) unter Bildung von Stirnkanten hergestellt;
b) die Stirnkanten werden mit sich längs zu diesen erstreckenden Drahtwendeln (10, 14) versehen;
c) zwei Drahtwendeln (10, 14) sind zur Bildung einer die Stirnkanten verbindenden Steckdrahtnaht derart in Überlappung bringbar, dass ein Steckdraht (16) zur Kupplung der Drahtwendeln (10, 14) und damit der Stirnkanten durch die sich überlappenden Bereiche steckbar ist;
**gekennzeichnet durch** folgende Verfahrensschritte:
d) das Trägergewebe (2) wird in einer die vorgesehene Länge des Transportbandes (1) überschreitenden Überlänge mit gleich großen Überständen (12) an beiden Enden gewebt;
e) das Trägergewebe (2) wird mit zumindest zwei Querfadenlagen (3, 4) gewebt;
f) die Querfäden (6) zumindest einer Querfadenlage (4) werden unter Beibehaltung wenigstens einer Querfadenlage (3) zumindest in beiden Überständen (12) weggelassen und/oder entfernt;
g) jeweils im Bereich des trägerseitigen Beginns der Überstände (12) werden die Wendeln (10, 14) mit dem Trägergewebe (2) verbunden;
h) danach werden die Überstände (12) unter Bildung von Umschlagstreifen (12) umgeschlagen, wobei die Umschlagstreifen (12) und die diesen gegenüberliegenden Abschnitte des Trägergewebes (2) eine Umschlagzone (13) bilden;
i) die Umschlagstreifen (12) werden an dem Trägergewebe (2) befestigt.
